# EUROPEAN PATENT APPLICATION

(11) **EP 4 113 451 A1**
(43) Date of publication of application: **04.01.2023**
(21) Application number: 21765065.4
(22) Date of filing: 14.01.2021
(51) Int. Cl.: G06T 17/05, G06T 19/00, G06T 7/10

(54) **MAP CONSTRUCTION METHOD AND APPARATUS, REPOSITIONING METHOD AND APPARATUS, STORAGE MEDIUM, AND ELECTRONIC DEVICE**

(30) Priority: 04.03.2020 CN 202010142780
(71) Applicant: GUANGDONG OPPO MOBILE TELECOMMUNICATIONS CORP., LTD., Dongguan, Guangdong 523860 (CN)
(72) Inventor: ZENG, Fantao, Dongguan, Guangdong 523860 (CN)
(74) Representative: Rossi, Ugo
(86) International application number: PCT/CN2021/071890
(87) International publication number: WO 2021/175022

(57) **Abstract**

Provided are a map construction method, a repositioning method, a map construction apparatus, a repositioning apparatus, a computer-readable storage medium, and an electronic device, which relate to the technical field of augmented reality. The map construction method comprises : acquiring a target key frame, performing feature extraction on the target key frame to obtain feature point information of the target key frame, and determining semantic information corresponding to the feature point information of the target key frame (S32); acquiring feature point information of a key frame previous to the target key frame and corresponding semantic information (S34); determining feature matching results of semantic information matching and feature point information matching between the target key frame and the previous key frame (S36); and according to the feature matching results, generating local map point information, so as to construct a map in view of the local map point information (S38). According to the methods and apparatuses, the precision of feature matching in an augmented reality scheme can be improved, thereby improving the accuracy of map construction and repositioning processes.

## Description

### CROSS-REFERENCE TO RELATED APPLICATION

The application claims priority to a Chinese patent application No. 202010142780.9 filed on March 04, 2020, entitled "MAP CONSTRUCTION METHOD, RELOCALIZATION METHOD AND APPARATUS, STORAGE MEDIUM, AND ELECTRONIC DEVICE". The entire contents of the aforementioned application are incorporated herein by reference.

### TECHNICAL FIELD

The disclosure relates to the field of augmented reality technologies, and particularly to a map construction method, a relocalization method, a map construction apparatus, a relocalization apparatus, a computer-readable storage medium, and an electronic device

### BACKGROUND

Augmented reality (AR) is a technology that integrates a virtual world with a real world, which has been widely applied to various fields such as education, game, healthcare, Internet of Things (IoT), and intelligent manufacturing.

In multi-person AR technology, both mapping and relocalization solutions involve a process of feature matching, and the feature matching plays a crucial role for AR experience. However, a problem of feature mismatching may occur due to influences of viewpoint change and distance change between a mapping device and a relocalization device, environmental factors, and the like. Such problem would result in poor robustness of the mapping and the relocalization, and adversely affect user experience of multi-person AR consequently.

### SUMMARY

According to a first aspect of the disclosure, a map construction method is provided and the method includes operations as follows. A target keyframe is acquired, feature extraction is performed on the target keyframe to obtain feature point information of the target keyframe, and semantic information corresponding to the feature point information of the target keyframe is determined; feature point information of a previous keyframe of the target keyframe and semantic information corresponding to the feature point information of the previous keyframe are acquired; a feature matching result of a matching of the semantic information and a matching of the feature point information between the target keyframe and the previous keyframe are determined; and local map point information according to the feature matching result is determined, and a map is constructed based on the local map point information.

According to a second aspect of the disclosure, a relocalization method is provided and the method includes operations as follows. A current frame is acquired, feature extraction is performed on the current frame to obtain feature point information of the current frame, and semantic information corresponding to the feature point information of the current frame are determined; a keyframe similar to the current frame is found from a keyframe set for map construction, and acquiring feature point information of the keyframe and semantic information corresponding to the feature point information of the keyframe are acquired; a feature matching result of a matching of the semantic information and a matching of the feature point information between the current frame and the keyframe is determined, and a pose of the current frame in a mapping device coordinate system is calculated based on the feature matching result; and a relative pose relationship between a mapping device and a relocalization device is calculated based on the pose of the current frame in the mapping device coordinate system and a pose of the current frame in a relocalization device coordinate system.

According to a third aspect of the disclosure, a map construction apparatus is provided and the apparatus includes a target keyframe acquiring module, a first information acquiring module, a matching result determining module, and a map constructing module. The target keyframe acquiring module is configured to acquire a target keyframe, perform feature extraction on the target keyframe to obtain feature point information of the target keyframe, and determine semantic information corresponding to the feature point information of the target keyframe. The first information acquiring module is configured to acquire feature point information of a previous keyframe of the target keyframe and semantic information corresponding to the feature point information of the previous keyframe. The matching result determining module is configured to determine a feature matching result of a matching of the semantic information and a matching of the feature point information between the target keyframe and the previous keyframe. The map constructing module is configured to generate local map point information according to the feature matching result, and construct a map based on the local map point information.

According to a fourth aspect of the disclosure, a relocalization apparatus is provided and the apparatus includes a current frame processing module, a second information acquiring module, a first pose calculating module and a second pose calculating module. The current frame processing module is configured to acquire a current frame, perform feature extraction on the current frame to obtain feature point information of the current frame, and determine semantic information corresponding to the feature point information of the current frame. The second information acquiring module is configured to find, from a keyframe set for map construction, a keyframe similar to the current frame, and acquire feature point information of the keyframe and semantic information corresponding to the feature point information of the keyframe. The first pose calculating module is configured to determine a feature matching result of a matching of the semantic information and a matching of the feature point information between the current frame and the keyframe, and calculate, based on the feature matching result, a pose of the current frame in a mapping device coordinate system. The second pose calculating module is configured to calculate, based on the pose of the current frame in the mapping device coordinate system and a pose of the current frame in a relocalization device coordinate system, a relative pose relationship between a mapping device and a relocalization device.

According to a fifth aspect of the disclosure, a computer-readable storage medium is provided. The computer-readable storage medium is stored with a computer program, and the computer program is configured to, when executed by a processor, implement the above map construction method or the above relocalization method.

According to a sixth aspect of the disclosure, an electronic device is provided. The electronic device includes a processor and a memory, the memory is configured to store one or more computer program therein, where the one or more computer program is configured to, when executed by the processor, cause the processor to implement the above map construction method or the above relocalization method.

### BRIEF DESCRIPTION OF THE DRAWINGS

FIG. 1 is a schematic diagram illustrating an exemplary system architecture to which a map construction solution or a relocalization solution according to embodiments of the disclosure may be applied;
FIG. 2 is a schematic structural diagram of an electronic device adapted to implement some embodiments of the disclosure;
FIG 3 is a flowchart illustrating a map construction method according to some exemplary embodiments of the disclosure;
FIG 4 is a flowchart illustrating a whole process of map construction according to some exemplary embodiments of the disclosure;
FIG 5 is a flowchart illustrating a relocalization method according to some exemplary embodiments of the disclosure;
FIG 6 is a flowchart illustrating a whole process of relocalization according to some exemplary embodiments of the disclosure;
FIG 7 is a schematic block diagram illustrating a map construction apparatus according to some exemplary embodiments of the disclosure; and
FIG 8 is a schematic block diagram illustrating a relocalization apparatus according to some exemplary embodiments of the disclosure.

### DETAILED DESCRIPTION

Exemplary implementations are now described more comprehensively with reference to the drawings. However, the exemplary implementations may be implemented in various forms, and should not be understood as being limited to the examples described herein. Conversely, the implementations are provided to make the disclosure more comprehensive and complete, and comprehensively convey the idea of the exemplary implementations to those skilled in the art. The described features, structures or characteristics may be combined in one or more embodiments in any appropriate manner. In the following description, many specific details are provided to obtain a thorough understanding of the implementations of the disclosure. However, it should be understood by those skilled in the art that, the technical solutions of the disclosure may be implemented without one or more of the particular details, or another method, component, apparatus, operation, and the like may be used. In other cases, well-known technical solutions are not shown or described in detail to avoid obscuring the aspects of the disclosure.

In addition, the drawings are only schematic illustrations of the disclosure, and are not necessarily drawn to scale. The same reference numerals in the drawings indicate the same or similar parts, and the repetitions of the same reference numerals will be omitted. The block diagrams shown in the drawings are merely functional entities and do not necessarily correspond to physically or logically independent entities. The functional entities may be implemented in a software form, or one or more hardware modules or integrated circuits, or different networks and/or processor apparatuses and/or microcontroller apparatuses.

The flowcharts shown in the drawings are merely exemplary descriptions, and do not need to include all operations/blocks. For example, some operations/blocks may be further divided, while some operations/blocks may be combined or partially combined. Therefore, an actual execution order may change according to an actual case. Furthermore, the terms "first", "second", "third", "fourth" and the like used hereinafter are only for the purpose of distinction and should not be regarded as a limitation of the disclosure.

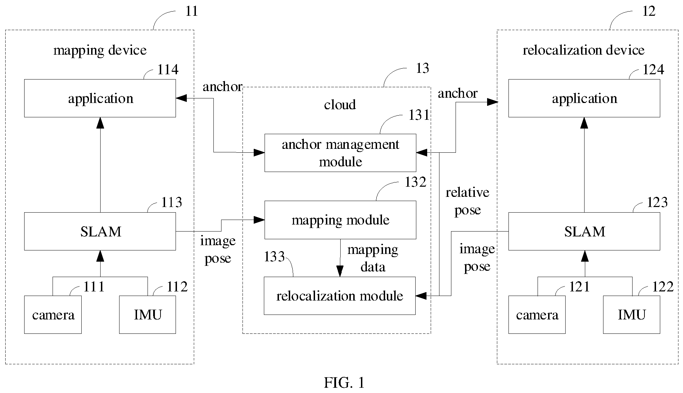

FIG. 1 is a schematic diagram illustrating an exemplary system architecture to which a map construction solution or a relocalization solution according to embodiments of the disclosure may be applied.

As illustrated in FIG. 1, the system architecture for implementing a multi-person AR solution of the disclosure may include a mapping device 11, a relocalization device 12 and a cloud (i.e., a cloud server) 13.

An exemplary solution for the map construction of the disclosure is described as follows.

The mapping device 11 may acquire image information through a camera 111 provided in the mapping device 11, and acquire inertial information through an inertial measurement unit (IMU) 112. The image information and the inertial information are transmitted to a simultaneous localization and mapping (SLAM) unit 113, and then the SLAM unit 113 may transmit the image information and a pose corresponding to the image information to a mapping module 132 of the cloud 13.

The mapping module 132 of the cloud 13 may determine whether a frame data is qualified as a keyframe (noted as a target keyframe for distinctive description), and may perform, in response to determining that the frame data is qualified as the target keyframe, feature extraction of the target keyframe to obtain feature point information of the target keyframe, and then determine, by using semantic segmentation, semantic information corresponding to the feature point information. The mapping module 132 may obtain feature point information of a previous keyframe and semantic information corresponding to the feature point information of the previous keyframe. Then, the mapping module 132 may determine a feature matching result of a matching of the semantic information and a matching of the feature point information between the target keyframe and the previous keyframe, and then generate local map point information according to the feature matching result. By performing the above operations for each image frame, a map may be constructed.

An exemplary relocalization solution of the disclosure is described as follows.

The relocalization device 12 may acquire a current frame image, i.e., a current frame, through a camera 121 provided in the relocalization device 12, and acquire inertial information corresponding to the current frame image through an IMU 122. A SLAM unit 123 may transmit the current frame image and a pose corresponding to the current frame image to a relocalization module 133 of the cloud 13.

The relocalization module 133 of the cloud 13 may perform feature extraction on the current frame to obtain feature point information of the current frame, and determine, by semantic segmentation, semantic information corresponding to the feature point information of the current frame. The relocalization module 133 may find, from a keyframe set for map construction, a keyframe similar to the current frame, and acquire feature point information of the keyframe and semantic information corresponding to the feature point information of the keyframe. Then, the relocalization module 133 may determine a feature matching result of a matching of the semantic information and a matching of the feature point information between the current frame and the keyframe, and calculate, based on the feature matching result, a pose of the current frame in a mapping device coordinate system. Then, the relocalization module 133 may calculate, based on the feature matching result, a pose of the current frame in a coordinate system of the mapping device 11. Since the pose of the current frame in the coordinate system of the relocalization device 12 may be obtained, a relative pose relationship between the relocalization device 12 and the mapping device 11 may be solved out, that is, a process of the relocalization is completed.

In addition, the mapping device 11 may configure an anchor through an application 114, and then transmit anchor information to an anchor management module 131 of the cloud 13. The relocalization device 12 may transmit the anchor information to the anchor management module 131 of the cloud 13 through an application 124. As such, based on the relative pose relationship determined by the relocalization module 133, the mapping device 11 and the relocalization device 12 are enabled to simultaneously display both of a virtual object configured by the mapping device 11 and a virtual object configured by the relocalization device 12, thereby realizing an interactive process of multi-person AR.

In the above exemplary description, the cloud 13 implements both the map construction solution and the relocalization solution of the disclosure. In other words, various operations of the following method are executed by the cloud 13, and the apparatus corresponding to the method may be disposed in the cloud 13. As such, it avoids a problem of implementing the processing process on the terminal device limited to computing power.

Although the process of implementing the solution in the cloud is described in detail in the following, it should be noted that the map construction solution may be implemented on the mapping device 11. In other words, various operations of the map construction method described hereinafter may be implemented by the mapping device 11, and the map construction apparatus corresponding to the map construction method may be disposed on the mapping device 11. In addition, the relocalization solution may be implemented on the relocalization device 12, that is, various operations of the relocalization method described hereinafter may be implemented by the relocalization device 12, and the relocalization apparatus corresponding to the relocalization method may be disposed on the relocalization device 12.

In this case, the exemplary solution may be implemented directly by the mapping device 11 and the relocalization device 12, that is, the exemplary solution may be implemented without the participation of the cloud 13. In addition, it should be noted that the mapping device 11 and the relocalization device 12 do not constitute an absolute limitation thereon. In some cases, the mapping device 11 may be taken as a relocalization device in response to requiring a relocalization operation; the relocalization device 12 may be taken as a mapping device in response to mapping in a new scene.

The type of the mapping device and the relocalization device may be, for example, a mobile phone, a tablet computer, an AR helmet, and an AR glasses, and the disclosure are not limited to these examples

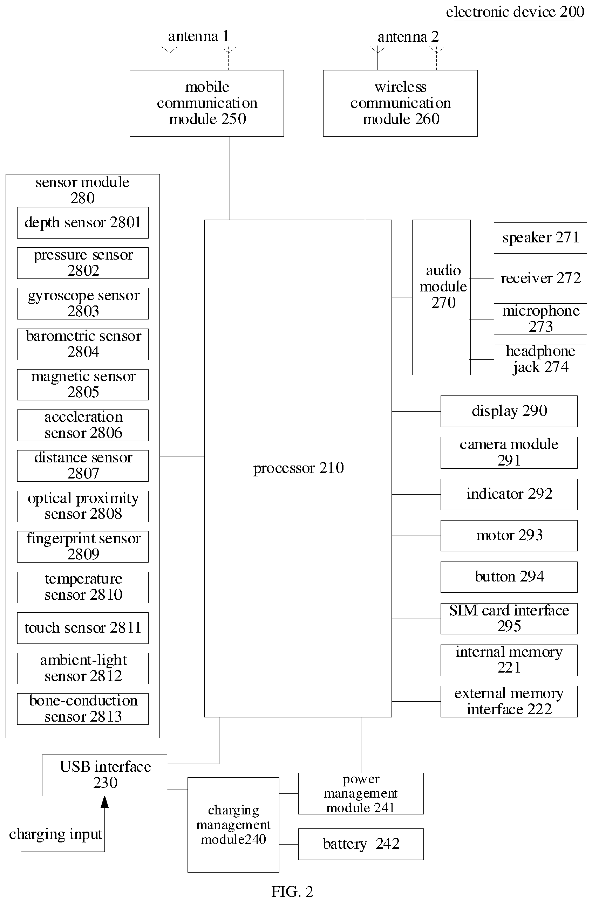

FIG. 2 is a schematic structural diagram of an electronic device adapted to implement some embodiments of the disclosure. The mapping device and the relocalization device of the disclosure may be implemented as the electronic device illustrated in FIG. 2. It should be noted that the electronic device illustrated in FIG. 2 is only an example, and does not constitute any limitation on functions and use ranges of the embodiments of the disclosure.

The electronic device of the disclosure at least includes a processor and a memory. The memory is configured to store one or more program therein, and the one or more computer program is configured to, when executed by the processor, cause the processor to implement the map construction method or the relocalization method according to the exemplary embodiments of the disclosure.

As illustrated in FIG. 2, the electronic device 200 may include a processor 210, an internal memory 221, an external memory interface 222, a universal serial bus (USB) interface 230, a charging management module 240, a power management module 241, a battery 242, an antenna 1, an antenna 2, a mobile communication module 250, a wireless communication module 260, an audio module 270, a speaker 271, a receiver 272, a microphone 273, a headphone jack 274, a sensor module 280, a display 290, a camera module 291, an indicator 292, a motor 293, a button 294, a subscriber identification module (SIM) card interface 295, etc. The sensor module 280 may include, for example, one or more of a depth sensor 2801, a pressure sensor 2802, a gyroscope sensor 2803, a barometric sensor 2804, a magnetic sensor 2805, an acceleration sensor 2806, a distance sensor 2807, an optical proximity sensor 2808, a fingerprint sensor 2809, a temperature sensor 2810, and a touch sensor 2811, an ambient-light sensor 2812, a bone-conduction sensor 2813.

It should be noted that the structure illustrated in the embodiments of the disclosure does not constitute any limitation on the electronic device 200.. In some other embodiments of the disclosure, the electronic device 200 may include more or fewer components than those shown in the drawing, or combine some components, or split some components, or have different component arrangements. Components shown in drawing may be implemented in hardware, software, or a combination of hardware and software.

The processor 210 may include one or more processing units. For example, the processor 210 may include one or more of an application processor (AP), a modem processor, a graphics processor unit (GPU), an image signal processor (ISP), a controller, a video codec, a digital signal processor (DSP), a baseband processor and/or a neural-network processor (NPU). Specifically, various processing units may be independent components or be integrated in one or more processors. In addition, the processor 210 may be further provided with a memory that is configured to store instructions and data therein.

The USB interface 230 complies with the USB standard specification. Specifically, the USB interface 230 may be, for example, a MiniUSB interface, a MicroUSB interface, and/or a USBTypeC interface. The USB interface 230 may be configured to connect a charger to charge the electronic device 200, and may be further configured to transmit data between the electronic device 200 and peripheral devices. The USB interface 230 may be further configured to connect headphones and play audio through the headphones. The interface may be further configured to connect other electronic devices, such as an AR device.

The charging management 240 is configured to receive a charging input from the charger. The charger may be a wireless charger or a wired charger. The power management module 241 is configured to connect to the battery 242, the charging management module 240, and the processor 210. The power management module 241 receives an input from the battery 242 and/or the charging management module 240, and supplies power to the processor 210, the internal memory 221, an external memory, the display 290, the camera module 291, and the wireless-communications module 260, and the like.

A wireless communication function of the electronic device 200 may be implemented by using the antenna 1, the antenna 2, the mobile communications module 250, the wireless communications module 260, the modem processor, the baseband processor, and the like.

The mobile communication module 250 may provide a solution for wireless communication including 2G/3G/4G/5G, applied to the electronic device 200.

The wireless communication module 260 may provide solutions for wireless communication applied to the electronic devices, such as wireless local area (WLAN) network (i.e., wireless fidelity (Wi-Fi) network), Bluetooth (BT), global navigation satellite system (GNSS), frequency modulation (FM), near field communication technology (NFC) and infrared (IR) technologies.

The electronic device 200 may implement a display function through the GPU, the display 290, the application processor, and the like. The GPU is a microprocessor for image processing, and is connected to the display 290 and the application processor. The GPU is configured to perform mathematical and geometric calculation, and render an image. The processor 210 may include one or more GPUs that execute program instructions to generate or change display information.

The electronic device 200 may implement a photographing function through the ISP, the camera module 291, the video codec, the GPU, the display 290, the application processor, and the like. In some embodiments, the electronic device 200 may include one or N camera modules 291, where N is a positive integer greater than 1. When the electronic device 200 includes N cameras, one of the N cameras is a primary camera.

The internal memory 221 may be configured to store computer-executable program codes, where the executable program codes include instructions. The internal memory 221 may include a program storage area and a data storage area. The external memory interface 222 may be configured to connect an external memory card, such as a Micro SD card, thereby expanding storage capacity of the electronic device 200.

The electronic device 200 may implement audio functions, such as music playing, and recording, through the audio module 270, the speaker 271, the receiver 272, the microphone 273, the headset jack 274, the application processor, etc.

The audio module 270 is configured to convert digital audio information into analog audio signal output, and is also configured to convert an analog audio input into a digital audio signal. The audio module 270 may be further configured to encode and decode audio signals. In some embodiments, the audio module 270 may be provided in the processor 210, or some functional modules of the audio module 270 may be provided in the processor 210.

The speaker 271, also referred to as a "loudspeaker", is configured to convert an audio electrical signal into a sound signal. The electronic device 200 may provide music playing or the hands-free call answering through the speaker 271. The receiver 272, also referred to as an "earpiece", is configured to convert an audio electrical signal into a sound signal. When the electronic device 100 is used to answer a call or receive voice information, the receiver 272 may be placed near a people's ear to listen to a voice. The microphone 273, also referred to as a "mike" or a "mic", is configured to convert a sound signal into an electrical signal. When making a call or sending a voice message, a user may make a sound near the microphone 273 through the mouth of the user, to input a sound signal to the microphone 273. At least one microphone 273 may be disposed in the electronic device 200. The headset jack 274 is configured to connect to a wired headset.

The functions of the sensors included in the electronic device 200 are described as follows. The depth sensor 2801 is configured to obtain depth information of a scene. The pressure sensor 2802 is configured to sense a pressure signal, and can convert the pressure signal into an electrical signal. The gyroscope sensor 2803 may be configured to determine a motion pose of the electronic device 200. The barometric sensor 2804 is configured to measure air pressure. The magnetic sensor 2805 includes a Hall sensor. The electronic device 200 may detect opening and closing of a flip cover by using the magnetic sensor 2805. The acceleration sensor 2806 may detect accelerations in various directions (usually on three axes) of the electronic device 100. The distance sensor 2807 is configured to measure a distance. The optical proximity sensor 2808 may include, for example, a light-emitting diode (LED) and an optical detector such as a photodiode. The fingerprint sensor 2809 is configured to collect a fingerprint. The temperature sensor 2810 is configured to detect a temperature. The touch sensor 2811 is configured to transmit a detected touch operation to the application processor to determine a type of a touch event. The display 290 may provide a visual output related to the touch operation. The ambient-light sensor 2812 is configured to sense the brightness of the ambient light. The bone conduction sensor 2813 may acquire a vibration signal.

The button 294 includes a power button, a volume button, and the like. The button 294 may be a mechanical button or a touch button. The motor 293 may be configured to provide a caller vibration notification and/or a touch vibration feedback. The indicator 292 may be an indicator light, which may be used to indicate a charging status, a power change, or may be configured to indicate a message, a missed call, a notification, etc. The SIM card interface 295 is configured to connect to the SIM card. The electronic device 200 interacts with a network by using the SIM card, so as to implement functions such as calling and data communication.

The disclosure further provides a computer-readable storage medium. The computer-readable storage medium may be disposed in the electronic device described in the above embodiments; the computer-readable storage medium may alternatively exist alone without being disposed in the electronic device.

The computer-readable storage medium may be, such as system, apparatus, or component in form of an electric, magnetic, optical, electromagnetic, infrared, or semi-conductive, or any combination thereof, which is not limited to these examples. A more specific example of the computer-readable storage medium may include, but is not limited to, an electrical connection having one or more wires, a portable computer magnetic disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any appropriate combination thereof. In the disclosure, the computer-readable storage medium may be any tangible medium containing or storing a program, and the program may be used by or be used in combination with an instruction execution system, an apparatus, or a device.

The computer-readable storage medium may send, propagate, or transmit a program that is used by or used in combination with an instruction execution system, apparatus, or device. The program code included in the computer-readable storage medium may be transmitted by using any suitable medium, including but not limited to: a wireless medium, a wire, fiber optic cable, radio frequency (RF), etc., or any suitable combination thereof.

One or more programs are carried in the computer-readable storage medium. When the one or more programs are executed by the electronic device, the electronic device implements the method described in the embodiments as follows.

The flowcharts and block diagrams in the drawings illustrate the possible architecture, functionality, and operation of systems, methods and computer program products according to various embodiments of the disclosure. In this regard, each block in the flowcharts or block diagrams may represent a module, a program segment, or a portion of code, which includes one or more executable instructions for implementing a specified logical function. It should also be noted that, in some alternative implementations, the functions noted in the blocks may occur in an order different from the order noted in the drawings. For example, two blocks illustrated in succession may be executed substantially concurrently, or be executed in the reverse order sometimes, which depends upon the functionality involved. It should be noted that each block of the block diagrams and/or flowcharts, and combinations of blocks in the block diagrams and/or flowcharts, may be implemented with special purpose hardware-based systems that perform the specified functions or operations, or combinations of special purpose hardware and computer instructions.

The units involved in the embodiments described in the disclosure may be implemented in software or in hardware, and the above units may also be disposed in the processor. The names of the units do not constitute a limitation on the units under certain circumstances.

The exemplary solution of the disclosure will be described by taking a case where the mapping process and the relocalization process are implemented in the cloud as an example.

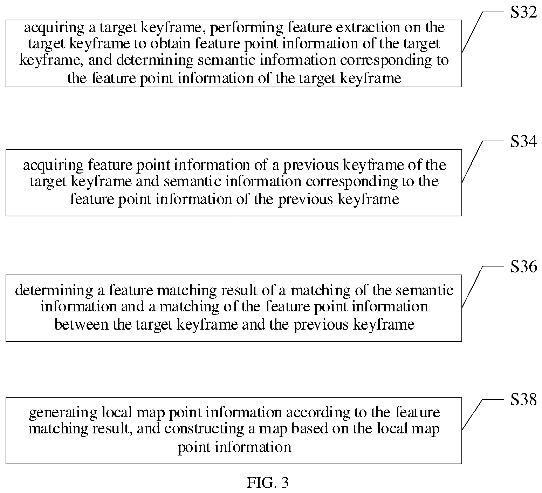

FIG 3 is a flowchart illustrating a map construction method according to some exemplary embodiments of the disclosure. Referring to FIG. 3, the map construction method may include operations as follows.

At S32, a target keyframe is acquired, feature extraction is performed on the target keyframe to obtain feature point information of the target keyframe, and semantic information corresponding to the feature point information of the target keyframe is determined.

In exemplary implementations of the disclosure, when scanning a scene, the mapping device may transmit an image frame and pose information corresponding to the image frame to the cloud. For example, the pose information may be 6 degrees of freedom (6DOF) pose information.

In response to acquiring the image frame, the cloud may determine whether the image frame is qualified as a keyframe. When the image frame is determined to be qualified as a keyframe, the image frame may be referred to as a target keyframe to distinguish the image frame from other keyframes described below.

A condition for determining whether the image frame is qualified as a keyframe may include one or a combination of conditions as follows. First, the cloud may determine whether a camera baseline distance between the image frame and the previous keyframe satisfies a preset distance requirement, and the image frame is determined to be qualified as the keyframe in response to the preset distance requirement being satisfied. Specifically, the preset distance requirement may be set according to actual precision requirement, which is not specifically limited in the disclosure. Second, the cloud may estimate a quantity of feature points of the image frame, and the image frame is determined to be qualified as the keyframe in response to the quantity of the feature points being greater than a quantity threshold. A specific value of the quantity threshold is not limited in the disclosure. For example, the quantity threshold may be set as 500. Third, the cloud may determine whether a camera rotation angle between the image frame and the previous keyframe satisfies a predetermined angle requirement, and the image frame is determined to be qualified as the keyframe in response to the predetermined angle requirement being satisfied. Angle ranges in the predetermined angle requirement should ensure a sufficient parallax between the image frame and the previous frame, and the angle ranges are not specifically limited in the disclosure.

It should be noted that, in some embodiments of the disclosure, the above three conditions may be combined to perform the judgment, thereby ensuring performability and accuracy of map construction.

After determining the target keyframe, the cloud may perform the feature extraction on the target keyframe to obtain the feature point information of the target keyframe.

According to some embodiment of the disclosure, the cloud may call a feature extraction algorithm and a feature descriptor. Specifically, the feature extraction algorithm may include, but is not limited to, features from accelerated segment Test (FAST) feature-point detection algorithm, a difference-of-gaussian (DoG) feature-point detection algorithm, a Harris feature point detection algorithm, a scale invariant feature transform (SIFT) feature-point detection algorithm, a speed up robust feature (SURF) feature-point detection algorithm, etc. The feature descriptor may include, but is not limited to, binary robust independent elementary features (BRIEF) feature point descriptor, binary robust invariant scalable keypoints (BRISK) feature point descriptor, fast retina keypoint (FREAK) feature point descriptor, etc.

Specifically, the feature extraction algorithm and the feature descriptor may be combined to determine a feature extraction mode. For example, the feature extraction mode may be a combination of the FAST feature point detection algorithm and the BRIEF feature point descriptor, or a combination of the DoG feature point detection algorithm and the FREAK feature point descriptor.

Then, the cloud may perform, based on the feature extraction mode, the feature extraction on the target keyframe to obtain the feature point information.

In addition, various feature extraction modes may be adopted to extract features of the target keyframe, thereby obtaining various types of feature point information. All of the various types of the feature point information may be taken as the determined feature point information.

According to some other embodiments of the disclosure, a machine-learning model may be adopted to extract feature point information of the target keyframe, where the machine learning model may be, for example, a trained convolutional neural network (CNN). Specifically, the target keyframe may be input to the CNN, and an output of the CNN or a feature map generated in a processing of the CNN may correspond to the feature point information.

Regarding a moving object in a scene waiting to be mapped, when the moving object is taken as a part of the map construction, there is an adverse effect on the subsequent relocalization process due to the moving object changing position or leaving the scene. For example, the moving object of the disclosure may be a living organism such as a human or animal, or an object which is movable or has obvious motion attributes, the disclosure is not limited to these examples.

In this case, in response to determining that the target keyframe contains a moving object, a non-moving object region of the target keyframe may be determined. Specifically, the non-moving object region is a region without containing the moving object. Then, the cloud may perform feature extraction on the non-moving object region of the target keyframe to obtain extracted feature point information, and take the extracted feature point information as the feature point information of the target keyframe. It should be noted that, the above processing procedure is equivalent to removing the moving object from the target keyframe and then performing the feature extraction.

Regarding the process of determining the moving object, object recognition is first performed on the target keyframe to obtain a recognized object according to some embodiments of the disclosure. For example, the object recognition is performed by employing a classification module or by directly implementing feature comparison, and the disclosure is not limited to these examples. Then, a similarity between the recognized object and each object in a preset moving object set is calculated, and in response to determining that the similarity between the recognized object and the object in the preset moving object set is larger than a similarity threshold, the recognized object is determined as the moving object,

Regarding the process of determining the moving object, according to some other embodiments of the disclosure, multiple frame image previous to the target keyframe are acquired from frame images of a video, and then these frame images are compared to determine changes in relative position of each object in the frame images. In this case, in response to determining an object in the target keyframe whose position relative to other objects has been changed, the object is determined as the moving object.

In addition, the cloud may further determine the semantic information corresponding to the feature point information of the target keyframe.

In exemplary implementations of the disclosure, semantic segmentation is first performed on the target keyframe to segment the target keyframe into multiple semantic regions. For example, a method of image semantic segmentation based on deep learning (ISSbDL) may be adopted to achieve the semantic segmentation performed on the target keyframe. For example, a segment model may be employed to perform the semantic segmentation.

Then, semantic annotations are added to pixels of the target keyframe as per the semantic regions. The semantic annotation may be an identification irrelevant to object category. For example, the semantic annotation of pixels corresponding to a table is 1, and the semantic annotation of pixels corresponding to a wall is 2. In addition, semantic recognition may be performed on the target keyframe to determine a semantic meaning of each object in the target keyframe, and then the semantic annotations corresponding to the semantic meaning are added to the pixels corresponding to the object. In this case, the semantic annotations of pixels corresponding to a table may be "zhuozi".

When the semantic annotations of the pixels of the target keyframe are determined, the cloud may determine pixel location information of each feature point in the feature point information of the target keyframe, and may acquire the semantic annotation corresponding to each the feature point according to the pixel location information of each the feature point, so as to determine the semantic information corresponding to the feature point information of the target keyframe.

In some other exemplary implementations for determining the semantic information corresponding to the feature point information of the target keyframe, in response to the target keyframe containing the moving object, the semantic segmentation may be performed only on the non-moving object region, rather than performing the semantic segmentation on the entire target keyframe. In the exemplary embodiments, in view of semantic segmentation model with a fixed input size, the pixels corresponding to the moving object in the target keyframe may be assigned a new value, thereby obtaining an assigned target keyframe. For example, values of these pixels are assigned 0. Then, the assigned target keyframe is input into the semantic segmentation model to obtain the semantic information corresponding to the feature point information of the target keyframe.

At S34, feature point information of a previous keyframe of the target keyframe and semantic information corresponding to the feature point information of the previous keyframe are acquired.

It should be understood by those skilled in the art that the process of extracting feature point information and semantic information at S32 is also performed for processing the previous keyframe corresponding to the target keyframe, and details will not be repeated here.

When the feature point information of the previous keyframe and the semantic information corresponding to the feature point information of the previous keyframe have been determined, the feature point information and the semantic information may be stored in the cloud. In the stage of processing the target keyframe, the feature point information of the previous keyframe and the semantic information corresponding to the feature point information of the previous keyframe may be directly obtained from the cloud.

At S36, a feature matching result of a matching of the semantic information and a matching of the feature point information between the target keyframe and the previous keyframe is determined.

According to some embodiments of the disclosure, the cloud may first perform a matching between the semantic information corresponding to the feature point information of the target keyframe and the semantic information corresponding to the feature point information of the previous keyframe. In other words, the cloud may determine whether the semantic information of corresponding positions in the target keyframe and the previous keyframe are the same or not. As such, in the feature point information of the target keyframe, feature point information semantically matched with the previous keyframe may be determined as the first feature point information. Likewise, in the feature point information of the previous keyframe, feature point information semantically matched with the target keyframe may be determined as the second feature point information. Then, a matching between the first feature point information and the second feature point information is performed to acquire the feature matching result.

In these illustrated embodiments, the semantic matching with relatively simple algorithms is performed first, and followed by the relatively complex feature point matching. As such, computing resource can be effectively saved.

According to some other embodiments of the disclosure, the cloud may first perform a matching between the feature point information of the target keyframe and the feature point information of the previous keyframe. In this way, in the feature point information of the target keyframe, feature points matched with feature points of the previous keyframe are determined as a third feature point information; and, in the feature point information of the previous keyframe, feature points matched with feature points of the target keyframe are determined as a fourth feature point information. Then, the cloud may acquire semantic information corresponding to the third feature point information and the semantic information corresponding to the fourth feature point information, and may perform a matching between the semantic information corresponding to the third feature point information and the semantic information corresponding to the fourth feature point information, thereby obtaining the feature matching result.

According to some yet other embodiments of the disclosure, the matching of semantic information and the matching of feature point information between the target keyframe and the previous keyframe may be performed simultaneously to obtain two matching results, and an intersection of the two matching results is taken as the feature matching result.

At S38, local map point information is generated according to the feature matching result, and a map is constructed based on the local map point information.

In some exemplary implementations of the disclosure, triangulation may be performed on the feature matching result determined at S36 to generate the local map point information related to the target keyframe and the previous keyframe. Specifically, the triangulation refers to determining a distance corresponding to a point based on an angle formed by observing the same point at two positions. Three-dimensional spatial information corresponding to the matched feature may be obtained through the triangulation

The above process is only directed at one target keyframe, and the obtained map point information corresponds to such the target keyframe.

The local map point information corresponding to all keyframes may be obtained, after the cloud processes all of the determined keyframes in a way similar to processing the target keyframe. Then, the cloud performs global nonlinear optimization on all of the keyframes and the local map point information, which is equivalent to the fact that both of three-dimensional information and pose information are optimized to generate complete map information, that is, the mapping process is accomplished.

Regarding the global nonlinear optimization, each keyframe corresponds to three-dimensional coordinate information in the map, and the three-dimensional coordinate information is mapped to the keyframe, these three-dimensional coordinate information have matched two-dimensional information, the pose information then is mapped to each the keyframe, and a residual processing is performed based on the two-dimensional information to obtain residuals, a sum of the residuals is used to construct a cost function, an iterative processing is continuously performed until the residual is less than a threshold, and the optimization is accomplished.

In addition, it should be noted that the cloud may receive, in real time, the image data and the pose data transmitted by the mapping device, and implement the above processing. Alternatively, the cloud may implement the above processing frame by frame only after all the image data and pose data transmitted by the mapping device have been received. The disclosure is not limited to these examples.

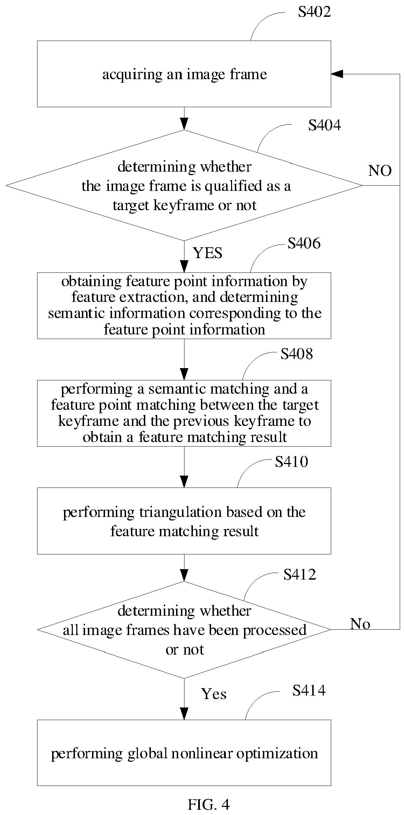

Referring to FIG. 4, an entire process of map construction method according to some embodiment of the disclosure will be described as follows.

At block S402, the cloud acquires a frame image. At block S404, the cloud determines whether the image frame is qualified as a target keyframe or not, and implements block S406 in response to the image frame being qualified as the target keyframe, or returns to block S402 in response to determining the image frame cannot be taken as the target keyframe.

At block S406, the cloud may perform feature extraction on the target keyframe to obtain feature point information, and determine, based on a semantic segmentation method, semantic information corresponding to the feature point information. Furthermore, in response to the target keyframe containing a moving object, the cloud may first remove the moving object from the target keyframe, and then perform the operation of feature extraction.

At block S408, the cloud performs a semantic matching and a feature point matching between the target keyframe and the previous keyframe to obtain a feature matching result.

At block S410, the cloud performs triangulation based on the feature matching result to obtain local map point information.

At block S412, the cloud determines whether all image frames uploaded by the mapping device have been processed or not, and returns to implement block S402 in response the image frames including an unprocessed image frame. The cloud implements operation of block S414 in response to determining that all the image frames have been processed.

At block S414, the cloud performs global nonlinear optimization to obtain map data, as a result, the process of map construction is completed.

In addition, the cloud may further receive anchor information transmitted by the mapping device and stores the anchor information therein, so as to facilitate a subsequent virtual object configuration operation for multi-person AR.

In view of the above, the map construction method according to the exemplary embodiments of the disclosure achieves the aspects as follows. On the one hand, the feature matching combined with semantic information in the map construction can reduce the occurrence of mismatching, enhance the accuracy of map construction, and optimize the user experience of multi-person AR. On the other hand, the map construction solution of the disclosure does not limit the execution device, the mapping device may implement the map construction process, or the cloud may implement the specific processing. In a case where the cloud implements the solution of the disclosure, the constraint of computing resource is relatively small, and therefore the application scenario of multi-person AR is greatly extended.

Furthermore, a relocalization method is provided by some exemplary implementations.

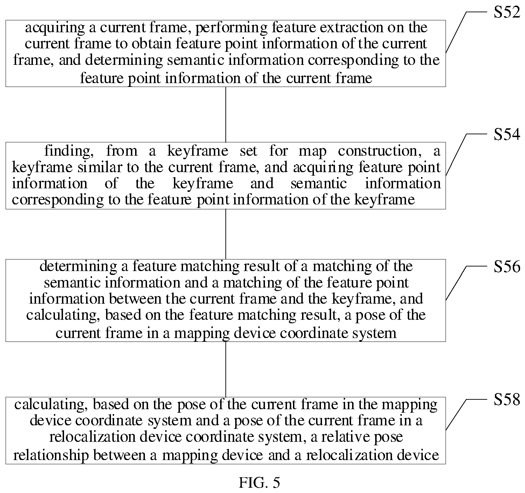

FIG 5 is a flowchart illustrating a relocalization method according to some exemplary embodiments of the disclosure. Referring to FIG. 5, the relocalization method may include operations as follows.

At S52, a current frame is acquired, feature extraction is performed on the current frame to obtain feature point information of the current frame, and semantic information corresponding to the feature point information of the current frame is determined.

In some exemplary implementations of the disclosure, after acquiring the current frame, the relocalization device may input image information and pose information to the cloud.

According to some embodiments of the disclosure, the cloud may access a feature extraction algorithm and a feature descriptor and determine a feature extraction mode, and then extract feature of the current frame based on the feature extraction mode. In addition, various types of feature extraction modes may be adopted to extract feature of the current frame, which is not limited in the disclosure.

According to some other embodiments of the disclosure, a machine-learning model may be adopted to extract feature point information of the current frame, where the machine learning model may be, for example, a trained CNN. Specifically, the current frame may be input to the CNN, and an output of the CNN or a feature map generated in a processing of the CNN may correspond to the feature point information.

Considering there may be a moving object in the scene of the current frame, in order to avoid mismatching, it is necessary to remove the moving object from the current frame before extracting the feature point information.

Specifically, in response to the current frame containing a moving object, a non-moving object region of the current frame may be determined. Specifically, the non-moving object region is a region except for the moving object. Then, the cloud may perform the feature extraction on the non-moving object region of the current frame to obtain extracted feature point information, and then the cloud may take the extracted feature point information as the feature point information of the current frame.

Regarding the process of determining the moving object, object recognition is first performed on the current frame to obtain a recognized object according to some embodiments of the disclosure. For example, the object recognition is performed by employing a classification module or by directly implementing feature comparison, and the disclosure is not limited to these examples. Then, a similarity between the recognized object and each object in a preset moving object set is calculated, and in response to determining that the similarity between the recognized object and the object in the preset moving object set is larger than a similarity threshold, the recognized object is determined as the moving object,

In addition, the cloud may further determine the semantic information corresponding to the feature point information of the current frame.

In exemplary implementations of the disclosure, semantic segmentation is first performed on the current frame to segment the current frame into multiple semantic regions. For example, the ISSbDL method may be adopted to achieve the semantic segmentation performed on the current frame. Specifically, a segment model may be employed to perform the semantic segmentation

Then, semantic annotations are added to pixels of the current frame as per the semantic regions. The semantic annotation may be an identification irrelevant to object category. For example, the semantic annotation of pixels corresponding to a table is 1, and the semantic annotation of pixels corresponding to a wall is 2. In addition, semantic recognition may be performed on the current frame to determine a semantic meaning of each object in the target keyframe, and then the semantic annotations corresponding to the semantic meaning are added to the pixels corresponding to the object. In this case, the semantic annotations of pixels corresponding to a table may be "zhuozi".

When the semantic annotations of the pixels of the current frame are determined, the cloud may
determine pixel location information of each feature point in the feature point information of the current frame, and may acquire the semantic annotation corresponding to each the feature point according to the pixel location information of each the feature point, so as to determine the semantic information corresponding to the feature point information of the current frame.

In some other exemplary implementations for determining the semantic information corresponding to the feature point information of the current frame, in response to the current frame containing the moving object, the semantic segmentation may be performed only on the non-moving object region, rather than performing the semantic segmentation on the entire current frame. In the exemplary embodiments, in view of semantic segmentation model is with a fixed input size, the pixels corresponding to the moving object in the current frame may be assigned a new value, thereby obtaining an assigned target keyframe. For example, the values of these pixels are assigned 0. Then, the assigned current frame is input into the semantic segmentation model to obtain the semantic information corresponding to the feature point information of the current frame.

At S54, a keyframe similar to the current frame is found from a keyframe set for map construction, and feature point information of the keyframe and semantic information corresponding to the feature point information of the keyframe are acquired.

The cloud may search the keyframe set stored for map construction, and find the keyframe similar to the current frame from the keyframe set. The exemplary embodiments of the disclosure do not limit the process of finding the similar keyframe. For example, the current frame may be transformed into a vector, a vector corresponding to each pre-stored keyframe is acquired, and a similarity may be determined by calculating a distance between the vector corresponding to the current frame and the vector corresponding to each pre-stored keyframe. The keyframe, whose similarity satisfied a requirement, is considered as the keyframe similar to the current frame.

Based on the feature point information and the corresponding semantic information of the keyframe determined by the above map construction method, the cloud may directly acquire the feature point information of the keyframe and the semantic information corresponding to the feature point information of the keyframe upon determining the keyframe similar to the current frame.

At S56, a feature matching result of a matching of the semantic information and a matching of the feature point information between the current frame and the keyframe is determined, and a pose of the current frame in a mapping device coordinate system is calculated based on the feature matching result.

According to some embodiments of the disclosure, the cloud may first perform a matching between the semantic information corresponding to the feature point information of the current frame and the semantic information corresponding to the feature point information of the keyframe. In other words, the cloud may determine whether the semantic information of corresponding positions in the target keyframe and the previous keyframe are the same or not. As such, in the feature point information of the current frame, feature point information semantically matched with the keyframe may be determined as the fifth feature point information. Likewise, in the feature point information of the keyframe, feature point information semantically matched with the current frame may be determined as the sixth feature point information. Then, a matching between the fifth feature point information and the sixth feature point information is performed to acquire the feature matching result.

In these illustrated embodiments, the semantic matching with relatively simple algorithms is performed first, and followed by the relatively complex feature point matching. As such, computing resource can be effectively saved.

According to some other embodiments of the disclosure, the cloud may first perform a matching between the feature point information of the current keyframe and the feature point information of the keyframe. As such, in the feature point information of the current keyframe, feature points matched with feature points of the keyframe are determined as a seventh feature point information; and in the feature point information of the keyframe, feature points matched with feature points of the current keyframe are determined as an eighth feature point information. The semantic information corresponding to the seventh feature point information and the semantic information corresponding to the eighth feature point information are then acquired, and a matching between the semantic information corresponding to the seventh feature point information and the semantic information corresponding to the eighth feature point information is performed to obtain the feature matching result.

According to some yet other embodiments of the disclosure, the matching of semantic information and the matching of feature point information between the current frame and the keyframe may be performed simultaneously to obtain two matching results, and an intersection of the two matching results is taken as the feature matching result.

When the feature matching result has been determined, the cloud may calculate, based on the feature matching result, the pose of the current frame in the mapping device coordinate system

First, the feature matching result establishes a two-dimensional information to two-dimensional information correlation between the current frame and the keyframe, and the three-dimensional map point information in the mapping device coordinate system corresponding to the feature point information of the keyframe has been determined. Thus, the feature point information of the current frame may be correlated with the three-dimensional map point information in the mapping device coordinate system of the keyframe, thereby obtaining point pair information.

The point pair information may be used to calculate the pose of the current frame in the mapping device coordinate system. Specifically, the point pair information may be taken as an input to solve a Perspective-n-Point (PnP) problem, thereby obtaining the pose of the current frame in the mapping device coordinate system. PnP is a classic method in the field of machine vision, which can determine a relative pose between a camera and an object according to n feature points of the object. Specifically, a rotation matrix and a translation vector between the camera and the object may be determined according to the n feature points of the object. In addition, n may be, for example, determined to be greater than or equal to 4.

Furthermore, regarding the process of calculating the pose of the current frame in the mapping device coordinate system, the disclosure may determine the pose based on the iterative closest point (ICP) method. The disclosure does not specifically limit the process to these examples.

At S58, a relative pose relationship between a mapping device and a relocalization device is calculated, based on the pose of the current frame in the mapping device coordinate system and a pose of the current frame in a relocalization device coordinate system.

When the pose of the current frame in the mapping device coordinate system has been determined at S56, such pose may be in conjunction with the pose of the current frame in the relocalization device coordinate system to calculate the relative pose relationship between the mapping device and the relocalization device.

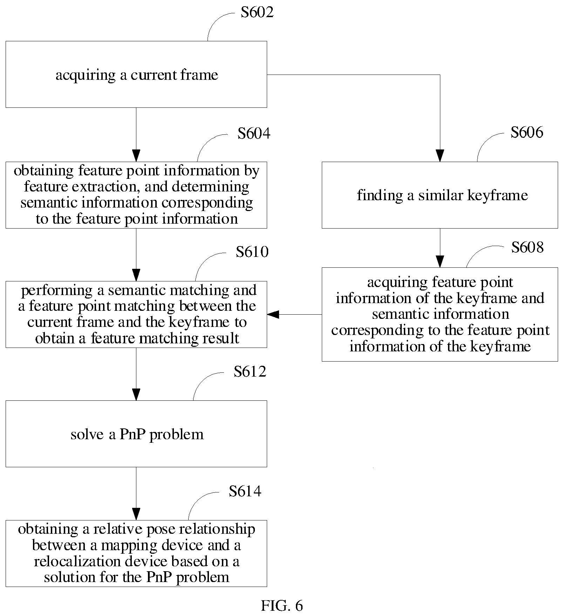

Referring to FIG. 6, an entire process of relocalization method according to some embodiment of the disclosure will be described as follow.

At block S602, the cloud acquires a current frame transmitted by the relocalization device. At block S604, the cloud may perform feature extraction on the current frame to obtain feature point information, and determine, based on a semantic segmentation method, semantic information corresponding to the feature point information. Furthermore, in response to the current frame containing a moving object, the cloud may first remove the moving object from the current frame, and then perform the operation of feature extraction.

At block S606, the cloud may search a pre-stored keyframe set for mapping to find a keyframe similar to the current frame; at block S608, the cloud may acquire feature point information of the keyframe and semantic information corresponding to the feature point information of the keyframe.

At block S610, the cloud may perform a semantic matching and a feature point matching between the current frame and the keyframe to obtain a feature matching result; at block S612, the cloud may solve, based on the feature matching result, a PnP problem to obtain a solution for the PnP problem, where the solution may be a pose of the current frame in a mapping device coordinate system.

At block S614, the cloud may obtain a relative pose relationship between a mapping device and a relocalization device based on the solution for the PnP problem.

When the relative pose relationship between the mapping device and the relocalization device has been determined, the cloud may transpose a virtual object configured for the mapping device to the relocalization device, and display the virtual object on the relocalization device. The relocalization device may configure a virtual object, and transmit, through the cloud, the virtual object to the mapping device for displaying. As such, the multi-person AR interaction process may be further achieved.

In view of the above, the relocalization method according to the exemplary embodiments of the disclosure achieves the aspects as follows. On the one hand, the feature matching combined with semantic information in the relocalization process can reduce the occurrence of mismatching, enhance the accuracy of relocalization, and optimize the user experience of multi-person AR. On the other hand, the relocalization solution of the disclosure does not limit the execution device, the mapping device may implement the relocalization process , or the cloud may implement the specific processing. In a case where the cloud implements the solution of the disclosure, the constraint of computing resource is relatively small, and therefore the application scenario of multi-person AR is greatly extended.

It should be noted that although the various operations of the method of the disclosure are described in a particular order in the drawing, it is not required or implied that the operations must be performed in the particular order, or all the illustrated operations must be performed to achieve the desired result. Additionally or alternatively, some operations may be omitted, or multiple operations may be combined into one operation to be performed, and/or one operation is decomposed into multiple operations to be performed.

Furthermore, some exemplary embodiments of the disclosure further provide a map construction apparatus.

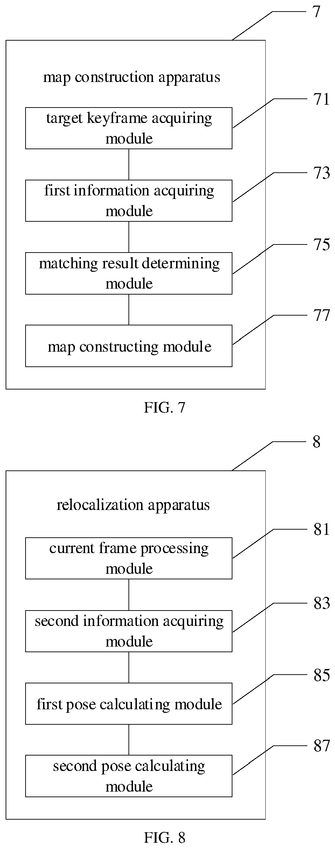

FIG 7 is a schematic block diagram illustrating the map construction apparatus according to some exemplary embodiments of the disclosure. Referring to FIG. 7, a map construction apparatus 7 is provided by exemplary embodiments of the disclosure, and the map construction apparatus 7 includes a target keyframe acquiring module 71, a first information acquiring module 7, a matching result determining module 75, and a map constructing module 77.

Specifically, the target keyframe acquiring module 71 may be configured to acquire a target keyframe, perform feature extraction on the target keyframe to obtain feature point information of the target keyframe, and determine semantic information corresponding to the feature point information of the target keyframe. The first information acquiring module 73 may be configured to acquire feature point information of a previous keyframe of the target keyframe and semantic information corresponding to the feature point information of the previous keyframe. The matching result determining module 75 may be configured to determine a feature matching result of a matching of the semantic information and a matching of the feature point information between the target keyframe and the previous keyframe. The map constructing module 77 may be configured to generate local map point information according to the feature matching result, and construct a map based on the local map point information.

According to some exemplary embodiments of the disclosure, the target keyframe acquiring module 71 may be further configured to: determine, in response to the target keyframe containing a moving object, a non-moving object region of the target keyframe, where the non-moving object region is a region without containing the moving object; and perform feature extraction on the non-moving object region of the target keyframe to obtain extracted feature point information, and take the extracted feature point information as the feature point information of the target keyframe.

According to some exemplary embodiments of the disclosure, regarding the process of determining a non-moving object region of the target keyframe, the target keyframe acquiring module 71 may be configured to: perform object recognition on the target keyframe to obtain a recognized object; calculate a similarity between the recognized object and an object in a preset moving object set; and take, in response to the similarity between the recognized object and the object in the preset moving object set is larger than a similarity threshold, the recognized object as the moving object.

According to some exemplary embodiments of the disclosure, regarding the process of determining semantic information corresponding to the feature point information of the target keyframe, the target keyframe acquiring module 71 may be configured to: perform semantic segmentation on the target keyframe to segment the target keyframe into semantic regions; add semantic annotations to pixels of the target keyframe as per the semantic regions; and determine pixel location information of each feature point in the feature point information of the target keyframe, and acquire the semantic annotation corresponding to each the feature point according to the pixel location information of each the feature point to determine the semantic information corresponding to the feature point information of the target keyframe.

According to some exemplary embodiments of the disclosure, regarding the process of determining semantic information corresponding to the feature point information of the target keyframe, the matching result determining module 75 may be configured to: perform matching between the semantic information corresponding to the feature point information of the target keyframe and the semantic information corresponding to the feature point information of the previous keyframe, determine first feature point information semantically matched with the previous keyframe from the feature point information of the target keyframe, and determine second feature point information semantically matched with the target keyframe from the feature point information of the previous keyframe; and perform matching between the first feature point information and the second feature point information to obtain the feature matching result.

According to some exemplary embodiments of the disclosure, the matching result determining module 75 may be further configured to: perform matching between the feature point information of the target keyframe and the feature point information of the previous keyframe, determine third feature point information matched with feature points of the previous keyframe from the feature point information of the target keyframe, and determine fourth feature point information matched with feature points of the target keyframe from the feature point information of the previous keyframe; acquire semantic information corresponding to the third feature point information and semantic information corresponding to the fourth feature point information; and perform matching between the semantic information corresponding to the third feature point information and the semantic information corresponding to the fourth feature point information to obtain the feature matching result.

According to some exemplary embodiments of the disclosure, regarding the process of the generating local map point information according to the feature matching result, the map constructing module 77 may be configured to: generate, by performing triangulation on the feature matching result, the local map point information related to the target keyframe and the previous keyframe.

According to some exemplary embodiments of the disclosure, regarding the process of the constructing a map based on the local map point information., the map constructing module 77 may be configured to: acquire local map point information corresponding to keyframes comprising the target keyframe; and perform global non-linear optimization on the keyframes and the local map point information corresponding to the keyframes, thereby generating map data.

According to some exemplary embodiments of the disclosure, a condition for determining an image frame as the target keyframe comprises one or a combination of the following conditions that: a camera baseline distance between the image frame and the previous keyframe satisfies a preset distance requirement; a quantity of feature points of the image frame is greater than a quantity threshold; and a camera rotation angle of the image frame relative to the previous keyframe satisfies a predetermined angle requirement.

Since the various functional modules of the map construction apparatus of the disclosure are the same as the implementations in the map construction method described above, details are not repeated here.

Furthermore, some exemplary embodiments of the disclosure further provide a relocalization apparatus.

FIG 8 is a schematic block diagram illustrating the relocalization apparatus according to some exemplary embodiments of the disclosure. Referring to FIG. 8, the relocalization apparatus 8 is provided by the exemplary embodiments of the disclosure, and the relocalization apparatus 8 includes a current frame processing module 81, a second information acquiring module 83, a first pose calculating module 85 and a second pose calculating module 87.

The current frame processing module 81 may be configured to acquire a current frame, perform feature extraction on the current frame to obtain feature point information of the current frame, and determine semantic information corresponding to the feature point information of the current frame. The second information acquiring module 83 may be configured to find, from a keyframe set for map construction, a keyframe similar to the current frame, and acquire feature point information of the keyframe and semantic information corresponding to the feature point information of the keyframe. The first pose calculating module 85 may be configured to determine a feature matching result of a matching of the semantic information and a matching of the feature point information between the current frame and the keyframe, and calculate, based on the feature matching result, a pose of the current frame in a mapping device coordinate system. The second pose calculating module 87 may be configured to calculate, based on the pose of the current frame in the mapping device coordinate system and a pose of the current frame in a relocalization device coordinate system, a relative pose relationship between a mapping device and a relocalization device.

According to some exemplary embodiments of the disclosure, the current frame processing module 81 may be configured to: determine, in response to the current frame containing a moving object, a non-moving object region of the current frame, where the non-moving object region is a region without containing the moving object; and perform feature extraction on the non-moving object region of the current frame to obtain extracted feature point information, and taking the extracted feature point information as the feature point information of the current frame.

According to some exemplary embodiments of the disclosure, regarding the process of determining the moving object, the current frame processing module 81 may be configured to: perform object recognition on the current frame to obtain a recognized object; calculate a similarity between the recognized object and an object in a preset moving object set; and take, in response to the similarity between the recognized object and the object in the preset moving object set is larger than a similarity threshold, the recognized object as the moving object.

According to some exemplary embodiments of the disclosure, regarding the process of the determining semantic information corresponding to the feature point information of the current frame, the current frame processing module 81 may be configured to: perform semantic segmentation on the current frame to thereby segment the current frame into semantic regions; add semantic annotations to pixels of the current frame as per the semantic regions; and determine pixel location information of each feature point in the feature point information of the current frame, and acquiring the semantic annotation corresponding to each the feature point according to the pixel location information of each the feature point to determine the semantic information corresponding to the feature point information of the current frame.

According to some exemplary embodiments of the disclosure, regarding the process of determining a feature matching result of a matching of the semantic information and a matching of the feature point information between the current frame and the keyframe, the first pose calculating module 85 may be configured to: perform matching between the semantic information corresponding to the feature point information of the current frame and the semantic information corresponding to the feature point information of the keyframe, determine fifth feature point information semantically matched with the keyframe from the feature point information of the current frame, and determine sixth feature point information semantically matched with the current frame from the feature point information of the keyframe; and perform matching between the fifth feature point information and the sixth feature point information to obtain the feature matching result.

According to some exemplary embodiments of the disclosure, regarding the process of calculating, based on the feature matching result, a pose of the current frame in a mapping device coordinate system, the first pose calculating module 85 may be configured to: perform matching between the feature point information of the current frame and the feature point information of the keyframe, determine seventh feature point information matched with feature points of the keyframe from the feature point information of the current frame, and determine eighth feature point information matched with feature points of the current frame from the feature point information of the keyframe; acquire semantic information corresponding to the seventh feature point information and the semantic information corresponding to the eighth feature point information; and perform matching between the semantic information corresponding to the seventh feature point information and the semantic information corresponding to the eighth feature point information to obtain the feature matching result.

According to some exemplary embodiments of the disclosure, regarding the process of calculating, based on the feature matching result, a pose of the current frame in a mapping device coordinate system, the first pose calculating module 85 may be configured to: correlate, based on the feature matching result and three-dimensional map point information in the mapping device coordinate system corresponding to the feature point information of the keyframe, the feature point information of the current frame with the three-dimensional map point information of the keyframe in the mapping device coordinate system, to obtain point pair information; and calculate, based on the point pair information, the pose of the current frame in the mapping device coordinate system.

Since the various functional modules of the relocalization apparatus of the disclosure are the same as the implementations in the relocalization method described above, details are not repeated here.

Based on the map construction apparatus and the relocalization apparatus, on the one hand, the mapping and the relocalization solution employees the feature matching combined with semantic information in the map construction. As such, the occurrence of mismatching can be reduced, the precision of map construction can be improved, the robustness of the mapping and the relocalization solution can be enhanced, thereby significantly improving the user experience of multi-user AR. On the other hand, the mapping and the relocalization solution of the disclosure does not limit the execution device. That is, the process of mapping and relocalization of the disclosure may be implemented by a terminal device involved in multi-person AR. Alternatively, the specific operations may be implemented by the cloud. The computing resource constraint plays a relatively small role in the case where the solution of the disclosure is implemented by the cloud, and therefore the application scenarios of multi-person AR has been greatly expanded.

Through descriptions of the foregoing embodiments, it is easy for those skilled in the art to understand that the exemplary embodiments described herein can be implemented by software or by combining the software with necessary hardware. Therefore, the technical solutions of the embodiments of the disclosure may be implemented in the form of a software product. The software product may be stored in a non-volatile storage medium (which may be a compact disc read-only memory (CD-ROM), a USB flash drive, a removable hard disk, or the like) or in a network. The software product includes several instructions for instructing a computer device (which may be a personal computer, a server, a terminal device, a network device, or the like) to perform the methods according to the embodiments of the disclosure.

In addition, the above drawings are merely schematic illustrations of the processing included in the method according to any of the exemplary embodiments of the disclosure, and are not intended for limitation. It is easy to understand that the processing illustrated in the above drawings does not indicate or limit the time sequence of these processing. Furthermore, it is easy to understand that these processing may be executed, for example, synchronously or asynchronously in multiple modules.

It should be noted that although several modules or units of the device for action execution are mentioned in the above detailed description, this division is not mandatory. In fact, according to the embodiments of the disclosure, the features and functions of two or more modules or units described above may be embodied in one module or unit. Conversely, the features and functions of a module or unit described above may be further divided into multiple modules or units to be embodied.

Those skilled in the art will easily conceive of other embodiments of the disclosure after considering the specification and practicing the disclosure disclosed herein. This application is intended to cover any variations, uses, or adaptive changes of the disclosure, and these variations, uses, or adaptive changes follow the general principles of the disclosure and include common knowledge or customary technical means in the technical field that are not described in the disclosure. The description and the embodiments are only regard as exemplary, and the true scope and spirit of the disclosure are indicated by the claims.

It should be noted that the disclosure is not limited to the precise structure described in the above and illustrated in the drawings, and various modifications and changes may be made without departing the scope. The scope of the disclosure is only limited by the appended claims.

## Claims

1. A map construction method, comprising:
acquiring a target keyframe, performing feature extraction on the target keyframe to obtain feature point information of the target keyframe, and determining semantic information corresponding to the feature point information of the target keyframe;
acquiring feature point information of a previous keyframe of the target keyframe and semantic information corresponding to the feature point information of the previous keyframe;
determining a feature matching result of a matching of the semantic information and a matching of the feature point information between the target keyframe and the previous keyframe; and
generating local map point information according to the feature matching result, and constructing a map based on the local map point information.

2. The map construction method as claimed in claim 1, wherein the performing feature extraction on the target keyframe to obtain feature point information of the target keyframe, comprises:
determining, in response to the target keyframe contains a moving object, a non-moving object region of the target keyframe, wherein the non-moving object region is a region without containing the moving object; and
performing feature extraction on the non-moving object region of the target keyframe to obtain extracted feature point information, and taking the extracted feature point information as the feature point information of the target keyframe.

3. The map construction method as claimed in claim 2, further comprising:
performing object recognition on the target keyframe to obtain a recognized object;
calculating a similarity between the recognized object and an object in a preset moving object set; and
taking, in response to the similarity between the recognized object and the object in the preset moving object set is larger than a similarity threshold, the recognized object as the moving object.

4. The map construction method as claimed in claim 2, wherein the determining semantic information corresponding to the feature point information of the target keyframe, comprises:
performing semantic segmentation on the target keyframe to segment the target keyframe into semantic regions;
adding semantic annotations to pixels of the target keyframe as per the semantic regions; and
determining pixel location information of each feature point in the feature point information of the target keyframe, and acquiring the semantic annotation corresponding to each the feature point according to the pixel location information of each the feature point to determine the semantic information corresponding to the feature point information of the target keyframe.

5. The map construction method as claimed in any one of claims 2 to 4, wherein the determining a feature matching result of a matching of the semantic information and a matching of the feature point information between the target keyframe and the previous keyframe, comprises:
performing matching between the semantic information corresponding to the feature point information of the target keyframe and the semantic information corresponding to the feature point information of the previous keyframe, determining first feature point information semantically matched with the previous keyframe from the feature point information of the target keyframe, and determining second feature point information semantically matched with the target keyframe from the feature point information of the previous keyframe; and
performing matching between the first feature point information and the second feature point information to obtain the feature matching result.

6. The map construction method as claimed in any one of claims 2 to 4, wherein the determining a feature matching result of a matching of the semantic information and a matching of the feature point information between the target keyframe and previous keyframe, comprises:
performing matching between the feature point information of the target keyframe and the feature point information of the previous keyframe, determining third feature point information matched with feature points of the previous keyframe from the feature point information of the target keyframe, and determining fourth feature point information matched with feature points of the target keyframe from the feature point information of the previous keyframe;
acquiring semantic information corresponding to the third feature point information and semantic information corresponding to the fourth feature point information; and
performing matching between the semantic information corresponding to the third feature point information and the semantic information corresponding to the fourth feature point information to obtain the feature matching result.

7. The map construction method as claimed in claim 2, wherein the generating local map point information according to the feature matching result, comprises:
generating, by performing triangulation on the feature matching result, the local map point information related to the target keyframe and the previous keyframe.

8. The map construction method as claimed in claim 7, wherein the constructing a map based on the local map point information, comprises:
acquiring local map point information corresponding to keyframes comprising the target keyframe; and
performing global non-linear optimization on the keyframes and the local map point information corresponding to the keyframes, thereby generating map data.

9. The map construction method as claimed in claim 1, wherein a condition for determining an image frame as the target keyframe comprises one or a combination of the following conditions that:
a camera baseline distance between the image frame and the previous keyframe satisfies a preset distance requirement;
a quantity of feature points of the image frame is greater than a quantity threshold; and
a camera rotation angle of the image frame relative to the previous keyframe satisfies a predetermined angle requirement.

10. A relocalization method, comprising:
acquiring a current frame, performing feature extraction on the current frame to obtain feature point information of the current frame, and determining semantic information corresponding to the feature point information of the current frame;
finding, from a keyframe set for map construction, a keyframe similar to the current frame, and acquiring feature point information of the keyframe and semantic information corresponding to the feature point information of the keyframe;
determining a feature matching result of a matching of the semantic information and a matching of the feature point information between the current frame and the keyframe, and calculating, based on the feature matching result, a pose of the current frame in a mapping device coordinate system; and
calculating, based on the pose of the current frame in the mapping device coordinate system and a pose of the current frame in a relocalization device coordinate system, a relative pose relationship between a mapping device and a relocalization device.

11. The relocalization method as claimed in claim 10, wherein the performing feature extraction on the current frame to obtain feature point information of the current frame, comprises:
determining, in response to the current frame contains a moving object, a non-moving object region of the current frame, wherein the non-moving object region is a region without containing the moving object; and
performing feature extraction on the non-moving object region of the current frame to obtain extracted feature point information, and taking the extracted feature point information as the feature point information of the current frame.

12. The relocalization method as claimed in claim 11, further comprising:
performing object recognition on the current frame to obtain a recognized object;
calculating a similarity between the recognized object and an object in a preset moving object set; and
taking, in response to the similarity between the recognized object and the object in the preset moving object set is larger than a similarity threshold, the recognized object as the moving object.

13. The relocalization method as claimed in claim 11, wherein the determining semantic information corresponding to the feature point information of the current frame, comprises:
performing semantic segmentation on the current frame to segment the current frame into semantic regions;
adding semantic annotations to pixels of the current frame as per the semantic regions; and
determining pixel location information of each feature point in the feature point information of the current frame, and acquiring the semantic annotation corresponding to each the feature point according to the pixel location information of each the feature point to determine the semantic information corresponding to the feature point information of the current frame.

14. The relocalization method as claimed in any one of claims 11 to 13, wherein the determining a feature matching result of a matching of the semantic information and a matching of the feature point information between the current frame and the keyframe, comprises:
performing matching between the semantic information corresponding to the feature point information of the current frame and the semantic information corresponding to the feature point information of the keyframe, determining fifth feature point information semantically matched with the keyframe from the feature point information of the current frame, and determining sixth feature point information semantically matched with the current frame from the feature point information of the keyframe; and
performing matching between the fifth feature point information and the sixth feature point information to obtain the feature matching result.

15. The relocalization method as claimed in any one of claims 11 to 13, wherein the determining a feature matching result of a matching of the semantic information and a matching of the feature point information between the current frame and the keyframe, comprises:
performing matching between the feature point information of the current frame and the feature point information of the keyframe, determining seventh feature point information matched with feature points of the keyframe from the feature point information of the current frame, and determining eighth feature point information matched with feature points of the current frame from the feature point information of the keyframe;
acquiring semantic information corresponding to the seventh feature point information and the semantic information corresponding to the eighth feature point information; and
performing matching between the semantic information corresponding to the seventh feature point information and the semantic information corresponding to the eighth feature point information to obtain the feature matching result.

16. The relocalization method as claimed in claim 11, wherein the calculating, based on the feature matching result, a pose of the current frame in a mapping device coordinate system, comprises:
correlating, based on the feature matching result and three-dimensional map point information in the mapping device coordinate system corresponding to the feature point information of the keyframe, the feature point information of the current frame with the three-dimensional map point information of the keyframe in the mapping device coordinate system, to obtain point pair information; and
calculating, based on the point pair information, the pose of the current frame in the mapping device coordinate system.

17. A map construction apparatus, comprising:
a target keyframe acquiring module, configured to acquire a target keyframe, perform feature extraction on the target keyframe to obtain feature point information of the target keyframe, and determine semantic information corresponding to the feature point information of the target keyframe;
a first information acquiring module, configured to acquire feature point information of a previous keyframe of the target keyframe and semantic information corresponding to the feature point information of the previous keyframe;
a matching result determining module, configured to determining a feature matching result of a matching of the semantic information and a matching of the feature point information between the target keyframe and the previous keyframe; and
a map constructing module, configured to generate local map point information according to the feature matching result, and construct a map based on the local map point information.

18. A relocalization apparatus, comprising:
a current frame processing module, configured to acquire a current frame, perform feature extraction on the current frame to obtain feature point information of the current frame, and determine semantic information corresponding to the feature point information of the current frame;
a second information acquiring module, configured to find, from a keyframe set for map construction, a keyframe similar to the current frame, and acquire feature point information of the keyframe and semantic information corresponding to the feature point information of the keyframe;
a first pose calculating module, configured to determine a feature matching result of a matching of the semantic information and a matching of the feature point information between the current frame and the keyframe, and calculate, based on the feature matching result, a pose of the current frame in a mapping device coordinate system; and
a second pose calculating module, configured to calculate, based on the pose of the current frame in the mapping device coordinate system and a pose of the current frame in a relocalization device coordinate system, a relative pose relationship between a mapping device and a relocalization device.

19. A non-transitory computer-readable storage medium stored with a computer program, wherein the computer program is configured to, when executed by a processor, implement the map construction method as claimed in any one of claims 1 to 9 or the relocalization method as claimed in any one of claims 10 to 16.

20. An electronic device, comprising:
a processor;
a memory, configured to store one or more computer program therein;
wherein the processor is configured to execute the one or more computer program stored in the memory to implement the map construction method as claimed in any one of claims 1 to 9 or the relocalization method as claimed in any one of claims 10 to 16.
